# EUROPÄISCHE PATENTANMELDUNG

(11) **EP 3 806 307 A1**
(43) Veröffentlichungstag der Anmeldung: **14.04.2021**
(21) Anmeldenummer: 19201905.7
(22) Anmeldetag: 08.10.2019
(51) Int. Cl.: H02M 3/337, H02M 1/00

(54) **ISOLIERTER DC/DC RESONANZWANDLER UND VERFAHREN ZUR DESSEN STEUERUNG**

(71) Anmelder: FRONIUS INTERNATIONAL GmbH, 4643 Pettenbach (AT)
(72) Erfinder: Die Erfindernennung liegt noch nicht vor
(74) Vertreter: Patentanwälte Pinter & Weiss OG

(57) **Zusammenfassung**

Um bei einem Resonanzwandler (1) niedrige Ausgangsströme (I_{S}) realisieren zu können ist vorgesehen, dass die Halbleiterschalter (S1, S2, S3, S4) einer Brückenschaltung (4) des Resonanzwandlers (1) in einem Niederstrommodus mit einer festgelegten Anregefrequenz (f_{Af}), die größer als die größte Resonanzfrequenz (fᵣₑₛₘₐₓ) eines Resonanzkreises (3) des Resonanzwandlers (1) ist, und asynchron zum Nulldurchgang (N) einer mit der Resonanzfrequenz (fᵣₑₛ) schwingenden elektrischen Größe des Resonanzkreises (3) geschaltet werden.

## Beschreibung

Die gegenständliche Erfindung betrifft ein Verfahren zur Steuerung eines Resonanzwandlers zum Erzeugen eines Ausgangsstromes und einer Ausgangsspannung, wobei der Resonanzwandler eine Brückenschaltung mit Halbleiterschaltern zum Erzeugen einer Wechselspannung und einen elektrischen Resonanzkreis mit einer Resonanzfrequenz umfasst, wobei der Resonanzkreis des Resonanzwandlers in einem Normalbetriebsmodus des Resonanzwandlers durch die Wechselspannung mit einer Anregefrequenz zum Schwingen angeregt wird, wobei Schaltzeitpunkte der Halbleiterschaltern der Brückenschaltung im Normalbetriebsmodus zur Erzeugung der Wechselspannung auf einen Nulldurchgang einer mit der Resonanzfrequenz schwingenden elektrischen Größe des Resonanzkreises synchronisiert werden. Die Erfindung betrifft ebenso einen Resonanzwandler mit einer entsprechenden Steuerung.

Schweißstromquellen mit einem Resonanzwandler und deren Regelung, insbesondere zum Einstellen eines gewünschten Schweißstromes und/oder einer gewünschten Schweißspannung, sind hinlänglich bekannt. Die EP 1 251 991 B1 beschreibt beispielsweise eine derartige Schweißstromquelle und Regelung. Ein Resonanzkreis des Resonanzwandlers wird mit einer Wechselspannung mit bestimmter Frequenz (Anregefrequenz) angeregt. Diese Wechselspannung wird mit einer Vollbrücke mit Schaltern erzeugt, indem die Schalter der beiden Brückenzweige mit der gewünschten Frequenz geschaltet werden. Aufgrund des implementierten Resonanzkreises ergibt sich in Abhängigkeit von der Last eine bestimmte Resonanzfrequenz (Eigenfrequenz mit maximaler Schwingungsamplitude) des Resonanzkreises. Der Resonanzkreis wird üblicherweise mit einer Anregefrequenz größer der Resonanzfrequenz, aber in der Nähe der Resonanzfrequenz, betrieben, um eine hohe Verstärkung zu erzielen. Es sind verschiedene Topologien für den Resonanzkreis bekannt, insbesondere ein Serien Resonanzkreis, ein Parallel Resonanzkreis und ein Serien-/Parallel Resonanzkreis. Üblicherweise wird in einer Schweißstromquelle ein Serien-/Parallel Resonanzkreis verwendet, bei dem eine Serienschaltung aus einer Induktivität und einer Kapazität besteht, welche in Serie zu einer weiteren Kapazität, welche parallel zur Last angeordnet ist, geschaltet ist. Die Last wird im Wesentlichen durch den Schweißlichtbogen bestimmt und bewegt sich zwischen einem Kurzschluss und dem Leerlauf (kein Lichtbogen). Wird die Last als ohmscher Widerstand repräsentiert, dann bewegt sich die Last zwischen dem Widerstand Null (oder annähernd Null) bei Kurzschluss und unendlich bei Leerlauf (z.B. nach Lichtbogenabriss). Die Resonanzfrequenz steigt mit der Last an. Durch Dimensionierung der elektrischen Komponenten des Resonanzkreises (Kapazitäten, Induktivitäten) kann der Bereich der Resonanzfrequenz und das Übertragungsverhalten (insbesondere Verstärkung) festgelegt werden. Im Resonanzkreis kann auch ein Transformator vorgesehen sein. In diesem Fall ist die parallele Kapazität üblicherweise parallel zur Sekundärwicklung des Transformators geschaltet. Die Wicklungsinduktivitäten und/oder die Streuinduktivität des Transformators können ebenso als Komponenten des Resonanzkreises betrachtet werden, oder vernachlässigt werden. Der Resonanzkreis zeichnet sich durch ein frequenzabhängiges Übertragungsverhalten (Frequenzkennlinie der Spannungsverstärkung in Abhängigkeit der Frequenz) aus. Wird der Resonanzkreis mit einer bestimmten Schaltfrequenz der Eingangsspannung der Brückenschaltung angeregt, ergibt sich aus der Frequenzkennlinie eine bestimmte Spannungsverstärkung und damit in Abhängigkeit von der Eingangsspannung eine bestimmte Schweißspannung. Bei Anregung mit der Eigenfrequenz des Resonanzkreises stellt sich Resonanz und die maximale Verstärkung ein, weshalb auch von Resonanzfrequenz gesprochen wird. Die Ausgangsleistung des Resonanzkonverters, kann durch die Regelung der in den Resonanzkreis vom Eingang eingespeisten elektrischen Energie eingestellt werden, was üblicherweise durch die Regelung der Pulsbreite der Eingangsspannung und der Anregefrequenz erfolgt. Es kann der Ausgangsstrom oder die Ausgangsspannung geregelt werden, woraus sich mit der Last (z.B. ohmscher Widerstand) die Ausgangsspannung oder der Ausgangsstrom ergibt. Mit jedem Puls fließt elektrische Energie vom Eingang in den Resonanzkreis (Treibphase). Zwischen aufeinanderfolgenden Pulsen (mit abwechselndem Vorzeichen) werden die Schalter so geschaltet, dass keine Energie in den Resonanzkreis fließt (Freilaufphase). Die Pulsbreite kann dabei über eine Phasenverschiebung der Schaltzeitpunkte der Schalter der beiden Brückenzweige eingestellt werden. Dabei werden die Schaltzeitpunkte der Schalter eines Brückenzweiges auf den Nulldurchgang des Resonanzwandlerstromes im Resonanzkreis synchronisiert, um die Schaltverluste zu reduzieren, und die Schaltzeitpunkte der Schalter im anderen Brückenzweig mit einer erforderlichen Phasenverschiebung geschaltet.

Aufgrund von Verzögerung in der Erkennung des Nulldurchganges, Verzögerung durch Regelung, Verzögerung durch die Ansteuerung der Schalter und durch die Schalter selbst kann die zeitliche Länge der Treibphase (Pulsbreite) aber nicht beliebig kurz gehalten werden. Beispielsweise muss aufgrund der Verzögerungen das Schaltsignal um eine vorgegebene Zeitdauer, typischerweise im Bereich von 100ns bis 300ns, vor dem Nulldurchgang erfolgen, um tatsächlich beim Nulldurchgang zu schalten. Ferner ergeben sich Verzögerungen durch die Erfassung des Nulldurchganges in der Regelung. Gleichfalls kann aufgrund der Verzögerungen nicht beliebig nahe beim Nulldurchgang ausgeschaltet werden und es ergibt sich dadurch auch beim Ausschalten eine typische Verzögerung von 100ns bis 300ns. Die minimale Pulsbreite liegt damit typischerweise im Bereich von 1µs. Aufgrund dieser Verzögerungen ist der mit einer Schweißstromquelle mit einem Resonanzkonverter minimale erreichbare Schweißstrom begrenzt.

Andererseits könnte aufgrund des Übertragungsverhaltens des Resonanzkreises (Verstärkung über Frequenz und Ausgangskennlinie) die Schaltfrequenz der Schalter erhöht werden und so versucht werden den Ausgangsstrom zu senken, da die Ausgangsspannungsverstärkung sinkt, je höherfrequent der Resonanzkreis angeregt wird. Aber da die minimale Treibphasendauer eine absolute Zeit darstellt, würde der Aussteuergrad (duty cycle) umso größer, je höher die Schaltfrequenz wird, und damit ein Senken des Ausgangsstromes verhindert.

Um diese Probleme zu beheben wurde in der EP 2 942 142 B1 bereits vorgeschlagen, für kleine Ausgangströme einen eigenen Steuermodus zu implementieren, bei dem die Schaltfrequenz gegenüber einem Normalmodus um einen ganzzahligen Faktor reduziert wird. Damit werden die Freilaufphasen verlängert, womit weniger Energie in den Resonanzkreis fließt und der Ausgangsstrom sinkt. Die Pulsdauern für die Treibphasen müssen damit nicht extrem verkürzt werden, womit die vorhandenen Verzögerungen beim Schalten keine Rolle spielen. Die Schaltzeitpunkte bleiben dabei auf den Nulldurchgang synchronisiert. Aufgrund der reduzierten Schaltfrequenz sinkt aber gleichzeitig die Regelbarkeit des Resonanzkonverters, weil weniger Regeleingriffe (Länge der Treibphase in jeder Schaltperiode) pro Zeiteinheit möglich sind. Auch die Leistungsübertragung wird schlechter, weil sich der Abstand zwischen den Treibphasen erhöht. Das führt auch zu unerwünschten verstärkten Strom- und Spannungsrippeln am Ausgang.

Es ist damit eine Aufgabe der gegenständlichen Erfindung, einen Resonanzwandler mit niedrigen Ausgangsströmen zu ermöglichen, der die Nachteile des Standes der Technik nicht aufweist.

Diese Aufgabe wird erfindungsgemäß dadurch gelöst, dass die Halbleiterschalter in einem Niederstrommodus mit einer vorgegebenen Schaltfrequenz, die größer als die größtmögliche Resonanzfrequenz des Resonanzkreises, und asynchron zum Nulldurchgang der mit der Resonanzfrequenz schwingenden elektrischen Größe des Resonanzkreises geschaltet werden. Indem die Synchronisierung der Wechselspannung auf den Nulldurchgang im Niederstrommodus aufgegeben wird, fallen Verzögerungszeiten aufgrund der Synchronisierung auf den Nulldurchgang weg, womit die Treibphasen verkürzt werden können, sodass niedrigere Ausgangsströme erzielt werden können. Die Regelbarkeit des Resonanzwandlers verschlechtert sich dabei nicht.

In einer vorteilhaften Ausgestaltung werden die Halbleiterschalter der Brückenschaltung zur Erzeugung der Wechselspannung mit Pulsen mit einer Pulsbreite geschaltet, wobei sich im Normalbetriebsmodus eine minimal mögliche Pulsbreite ergibt und im Niederstrommodus die Pulsbreite kleiner oder gleich der minimal möglichen Pulsbreite im Normalbetriebsmodus ist, gegebenenfalls unter Berücksichtigung einer vorgegebenen Hysterese. Da die Schaltzeitpunkte im Niederstrommodus nicht mehr auf den Nulldurchgang synchronisiert werden müssen, können die Pulsbreiten kleiner als die im Normalbetriebsmodus möglichen minimalen Pulsbreiten werden, wodurch sich die Treibphasen verkürzen lassen.

Daher kann in einer vorteilhaften Ausgestaltung vom Normalbetriebsmodus auf den Niederstrommodus umgeschaltet werden, wenn die Pulsbreite im Normalbetriebsmodus die minimale Pulsbreite, gegebenenfalls unter Berücksichtigung einer vorgegebenen Hysterese, erreicht. Umgekehrt kann vom Niederstrommodus in den Normalbetriebsmodus umgeschaltet werden, wenn die Pulsbreite im Niederstrommodus die minimal mögliche Pulsbreite des Normalbetriebsmodus, gegebenenfalls unter Berücksichtigung einer vorgegebenen Hysterese, erreicht.

In einer anderen vorteilhaften Ausgestaltung kann vom Normalbetriebsmodus auf den Niederstrommodus gewechselt werden, wenn ein Ausgangsstrom des Resonanzwandlers auf einen vorgegebenen Umschaltstrom absinkt, gegebenenfalls unter Berücksichtigung einer vorgegebenen Hysterese, Umgekehrt kann vom Niederstrommodus auf den Normalbetriebsmodus umgeschaltet werden, wenn ein Ausgangsstrom des Resonanzwandlers auf einen vorgegebenen Umschaltstrom ansteigt, gegebenenfalls unter Berücksichtigung einer vorgegebenen Hysterese.

Um ein stabiles, möglichst störungsfreies Umschalten zu ermöglichen, ist vorteilhafterweise vorgesehen, wenn beim Umschalten vom Normalbetriebsmodus in den Niederstrommodus zumindest der erste Puls der Wechselspannung im Niederstrommodus die minimale Pulsbreite des Normalbetriebsmodus aufweist. Das gleich gilt hierbei auch umgekehrt beim Umschalten vom Niederstrommodus in den Normalbetriebsmodus.

Um auch dynamisch ändernde Lasten des Resonanzwandlers zu ermöglichen, ist vorteilhafterweise vorgesehen, dass bei einer sich dynamisch ändernden Resonanzfrequenz des Resonanzkreises, die Anregefrequenz im Niederstrommodus größer als die größte Resonanzfrequenz gewählt wird.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine mögliche Implementierung eines Resonanzwandlers mit Brückenschaltung und Resonanzkreis,
Fig.2 eine Ansteuerung der Halbleiterschalter der Brückenschaltung zur Erzeugung der Wechselspannung mit Pulsen zur Anregung des Resonanzkreises und eine mit der Resonanzfrequenz schwingende elektrische Größe des Resonanzkreises,
Fig.3 die Synchronisierung der Pulse der Wechselspannung auf den Nulldurchgang der elektrischen Größe in einem Normalbetriebsmodus,
Fig.4 einen zeitlichen Wechselspannungsverlauf des Resonanzkreises im Niederstrommodus und
Fig.5 eine vorteilhafte Ausführung des Umschaltens zwischen Normalbetriebsmodus und Niederstrommodus.

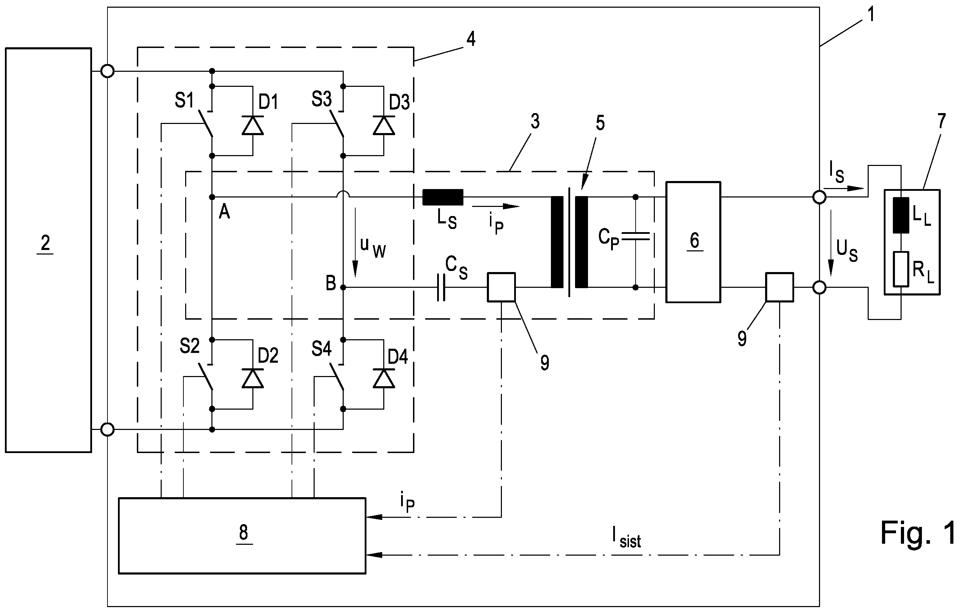

In Fig.1 ist ein Ausführungsbeispiel eines als Serien- / Parallel-Resonanzwandler ausgeführten Resonanzwandlers 1, beispielsweise für eine Schweißstromquelle, dargestellt. Der Resonanzwandler 1 wird von einer elektrischen Spannungsversorgung 2 mit elektrischer Energie versorgt. An den Resonanzwandler 1 ist eine elektrische Last 7, beispielsweise ein Schweißbrenner zum Erzeugen eines Lichtbogens zwischen einer Schweißelektrode und einem zu schweißenden Werkstück angeschlossen, die vom Resonanzwandler 1 mit einer Ausgangsspannung U_{S}, beispielsweise eine Schweißspannung, und einem Ausgangsstrom I_{S}, beispielsweise ein Schweißstrom, versorgt wird. Die elektrische Last 7 kann auch variabel sein, beispielsweise bei variierender Länge eines Lichtbogens beim Schweißen. Beim Schweißen brennt ein Lichtbogen zwischen einer Schweißelektrode (entweder abschmelzend oder nicht abschmelzend) des Schweißbrenners und dem zu schweißenden Werkstück über den der Ausgangsstrom I_{S} fließt. Im Falle einer Schweißstromquelle ändert sich die Last 7 (Lichtbogen) üblicherweise hochdynamisch. Die Last 7 ist in Fig.1 durch einen Lastwiderstand R_{L} und einer Leitungsinduktivität L_{L} dargestellt, wobei natürlich auch eine andere Last 7 möglich ist.

Die Spannungsversorgung 2 kann eine Gleichspannung bereitstellen, beispielsweise von einer Batterie, oder eine Wechselspannung, beispielsweise von einem einphasigen oder mehrphasigen elektrischen Versorgungsnetz. Im Falle einer Batterie als Spannungsversorgung 2 kann diese auch im Resonanzwandler 1 integriert sein. Im Falle einer Wechselspannung kann im Resonanzwandler 1 eingangsseitig ein bekannter Gleichrichter, auch mit Zwischenkreis, vorgesehen sein, um die Wechselspannung gleichzurichten. Gleichfalls können in diesem Fall eingangsseitig bedarfsweise auch bekannte Netzfilter und/oder Leistungsfaktorkorrekturschaltungen und/oder Hochsetz- oder Tiefsetzsteller angeordnet sein. Die Spannungsversorgung 2 kann ebenfalls an ein Wechselspannungsnetz angeschlossen sein und einen Gleichrichter, und gegebenenfalls Filter, etc. beinhalten, um eine Gleichspannung bereitzustellen.

Der Resonanzwandler 1 umfasst einen Resonanzkreis 3 und einen Wechselspannungserzeuger in Form einer Brückenschaltung 4, beispielsweise eine Vollbrücke wie in Fig.1. Der Resonanzkreis 3 besteht aus einer Serieninduktivität Ls und Serienkapazität C_{S}, die in Serie geschaltet sind, und einer weiteren dazu in Serie geschalteten Parallelkapazität C_{P}, die parallel zur Last 7 angeordnet ist, womit ein Serien- / Parallel-Resonanzwandler ausgebildet wird. Bei einem Serien-Resonanzwandler würde die Parallelkapazität C_{P} und bei einem Parallel-Resonanzwandler die Serienkapazität C_{S} wegfallen. Im gezeigten Ausführungsbeispiel ist im Resonanzkreis 3 auch ein Transformator 5 vorgesehen, wobei die Serieninduktivität L_{S} und Serienkapazität C_{S} in Serie zur Primärwicklung des Transformators 5 geschaltet sind und die Parallelkapazität C_{P} parallel zur Sekundärwicklung des Transformators 5, wobei diese aber parallel zur Primärwicklung geschalten sein könnte. Dieser Transformator 5 kann aber genauso entfallen. Ohne Transformator 5 wäre die Parallelkapazität C_{P} in Serie zur Serienschaltung von Serieninduktivität L_{S} und Serienkapazität C_{S} geschaltet und parallel zur Last 7 angeordnet. Im Resonanzkreis fließt ein Resonanzkreisstrom iₚ, beispielsweise ein Primärstrom des Transformators 5 im Ausführungsbeispiel der Fig.1, und es stellen sich Spannungen an den Komponenten des Resonanzkreises 3 ein. Der Resonanzkreis 3 hat eine Eigenfrequenz, die sich aus den elektrischen Komponenten des Resonanzkreises 3, aber auch aus der Last 7, ergibt. Bei Anregung des Resonanzkreises 3 schwingt eine elektrische Größe des Resonanzkreises 3 (elektrische Spannung oder elektrischer Strom) mit der Eigenfrequenz.

Der Resonanzkreis 3 wird mit einer Wechselspannung u_{W} mit einer Anregefrequenz f_{A} zum Schwingen angeregt, die von der Brückenschaltung 4 erzeugt wird. Zur Ausbildung eines Resonanzwandlers 1 wird der Resonanzkreis 3 durch diese Wechselspannung u_{W} zum Schwingen angeregt und es bildet sich eine Schwingung der elektrischen Größen im Resonanzkreis 3, z.B. des fließenden Resonanzkreisstrom iₚ oder der Spannungen, aus. Im Falle der Ausführung nach Fig.1 mit einem Transformator 5 fließt der Resonanzkreisstrom iₚ beispielsweise primärseitig.

Die entstehende Wechselspannung an der Parallelkapazität C_{P} kann zur Erzeugung der Ausgangsspannung U_{S} in einem ausgangsseitigen Gleichrichter 6 gleichgerichtet werden. Es sei angemerkt, dass die Gleichrichtung auf der Sekundärseite des Transformators 5 auch mit einer Mittelpunktanzapfung, oder anderen bekannten Schaltungen, ausgeführt sein kann. Ebenso können ausgangsseitig nach dem Gleichrichter 6 bedarfsweise Filter und/oder Glättungskondensatoren vorgesehen sein. Es könnte aber auch eine entstehende Wechselspannung an einer anderen elektrischen Komponente des Resonanzkreises 3 als Ausgangsspannung des Resonanzwandlers 1 verwendet werden. In diesem Fall könnte die Gleichrichtung in der Last 7 selbst oder auch zwischen Resonanzwandler 1 und Last 7 erfolgen.

Die Brückenschaltung 4 besteht aus zwei parallel geschalteten Brückenzweigen, in denen jeweils zwei Halbleiterschalter S1, S2, S3, S4, insbesondere Transistoren wie Bipolar- oder Feldeffekttransistoren, angeordnet sind. Parallel zu jedem Halbleiterschalter S1, S2, S3, S4 ist eine Freilaufdiode D1, D2, D3, D4 geschaltet. Die Wechselspannung u_{W} zur Anregung des Resonanzkreises 3 wird an den Punkten A, B zwischen den seriellen Halbleiterschalter S1, S2 und S3, S4 in den beiden Brückenzweigen abgegriffen. Die Halbleiterschalter S1, S2S3, S4 werden von einer Steuereinheit 8 (Hardware und/oder Software) angesteuert, wie durch die strichpunktierten Linien angedeutet. In dem in Fig. 1 angeführten Beispiel sind die Halbleiterschalter S1 und S2 als eigener Zweig, sowie die Halbleiterschalter S3 und S4 als eigener Zweig ausgeführt.

Der Resonanzkreis 3 hat eine Resonanzfrequenz fᵣₑₛ, die von den vorhandenen elektrischen Komponenten des Resonanzkreises 3 (Serieninduktivität L_{S}, Serienkapazität C_{S}, Parallelkapazität C_{P}), aber auch maßgeblich von der Last 7, beispielsweise vom Lastwiderstand R_{L}, bestimmt wird. Die Resonanzfrequenz fᵣₑₛ variiert zwischen der maximalen Resonanzfrequenz fᵣₑₛₘₐₓ bei offener Last 7 (z.B. Leerlauf), beispielsweise eine Frequenz von 150kHz, und der minimalen Resonanzfrequenz fᵣₑₛₘᵢₙ bei kurzgeschlossener Last 7 (z.B. Elektrode berührt Werkstück oder taucht in Schmelzbad ein beim Schweißen), beispielsweise eine Frequenz von 50 kHz. Der Resonanzkreis 3 wird üblicherweise überresonant angeregt, also mit einer Anregefrequenz f_{A} größer der Resonanzfrequenz fᵣₑₛ. Die Anregefrequenz f_{A} ist aber vorzugsweise so nahe wie möglich an der Resonanzfrequenz fᵣₑₛ. Einerseits werden dadurch die Schaltverluste klein gehalten und die Verstärkung des Resonanzwandlers 1 wird maximiert. Insbesondere auch deshalb ist eine Synchronisierung des Resonanzkreisstromes iₚ auf die Resonanzfrequenz fᵣₑₛ mittels des Nulldurchganges des Resonanzkreisstromes iₚ notwendig.

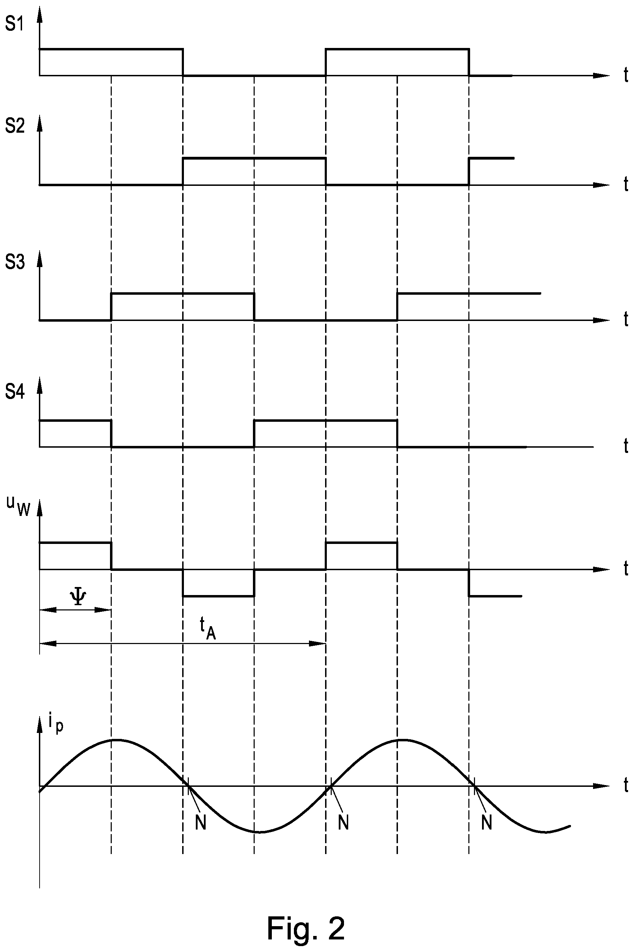

Mit der Brückenschaltung 4 wird durch Ansteuern der Halbleiterschalter S1, S2, S3, S4 eine Wechselspannung u_{W}, vorzugsweise eine Rechteckspannung, mit der gewünschten Anregefrequenz f_{A} erzeugt, wie anhand der Fig.2 erläutert wird. Im oberen Bereich von Fig.2 sind die Schaltmuster der Halbleiterschalter S1, S2, S3, S4 dargestellt. Es sei aber angemerkt, dass sich bei einer anderen Ausführung der Brückenschaltung 4 auch eine andere Anzahl von Halbleiterschalter S1, S2, S3, S4 und/oder andere Spannungsschaltmuster ergeben können. Die Halbleiterschalter S1, S2 und S3, S4 jeweils eines Brückenzweiges sind mit der Anregefrequenz f_{A} gegengleich geschaltet (unter Einhaltung einer bestimmten Totzeit, um ein gleichzeitiges Einschalten beider Schalter sicher zu verhindern). Die Halbleiterschalter S1, S2, S3, S4 werden damit in jeder Periode (durch die Anregefrequenz f_{A} festgelegt) jeweils einmal eingeschaltet und einmal ausgeschaltet. Die Halbleiterschalter S1, S2 und S3, S4 der beiden Brückenzweige sind um eine Phasenverschiebung zeitverschoben geschaltet. Daraus resultiert die pulsförmige Wechselspannung u_{W} mit der Schaltperiode t_{A} bzw. der Anregefrequenz f_{A} = 1/t_{A} und der Pulsbreite Ψ und der Resonanzkreisstrom iₚ, der mit der Resonanzfrequenz fᵣₑₛ schwingt. Die pulsförmige Wechselspannung u_{W} hat in der gezeigten Ausführung in jeder Schaltperiode t_{A} einen positiven und einen negativen Puls. Es ist aber nicht zwingend erforderlich positive und negative Pulse vorzusehen, sondern es könnten auch nur positive oder nur negative Pulse vorgesehen sein. Die Pulse der Wechselspannung u_{W} definieren Treibphasen, in der elektrische Energie von der Spannungsversorgung 2 in den Resonanzkreis 3 fließt. Dazwischen sind passive Phasen definiert, in denen die Wechselspannung u_{W} 0V ist und keine elektrische Energie von der Spannungsversorgung 2 in den Resonanzkreis 3 fließt. Sehr wohl wird aber auch in der passiven Phase Energie aus dem Resonanzkreis 3 an die Last 7 abgegeben. Diese Funktionsweise eines Resonanzwandlers 1 ist hinlänglich bekannt, beispielsweise aus der EP 1 251 991 B1, weshalb hier nicht näher darauf eingegangen wird.

Die Ausgangsspannung U_{S} und der Ausgangsstrom I_{S} werden im Wesentlichen durch die Anregefrequenz f_{A}, das Übertragungsverhalten des Resonanzwandlers 1 und die Pulsbreite Ψ der Pulse (Längen der Treibphasen) der Wechselspannung u_{W} bestimmt. Die Pulsbreite Ψ kann von der Steuereinheit 8 in jeder Schaltperiode angepasst werden. Die Anregefrequenz f_{A} ist auf den Nulldurchgang N einer elektrischen Größe des Resonanzkreises 3, beispielsweise des Resonanzkreisstromes iₚ, synchronisiert und folgt damit auch einer sich im Betrieb ändernden Resonanzfrequenz fᵣₑₛ (beispielsweise aufgrund einer sich ändernden Last 7). Das Übertragungsverhalten (Verstärkung über Frequenz und Ausgangskennlinie) ist im Wesentlichen durch die Auslegung des Resonanzkreises 3 festgelegt.

Der Resonanzwandler 1 wird damit üblicherweise gemäß den Vorgaben für die Ausgangsspannung U_{S} und/oder den Ausgangsstrom I_{S} von der Steuereinheit 8 durch Verändern der Anregefrequenz f_{A} und der Pulsbreiten Ψ der Treibphasen gesteuert. Zur Steuerung kann auch ein Istwert des Ausgangsstromes I_{S} (wie in Fig.1) und/oder der Ausgangsspannung gemessen werden. Zur Steuerung wird üblicherweise auch ein Strom und/oder eine Spannung im Resonanzkreis 3 erfasst, beispielsweise der Resonanzkreisstrom i_{P} im Primärkreis wie in Fig.1. Hierfür sind geeignete Messeinheiten, beispielsweise Strommesseinheiten 9, vorgesehen.

Bei einer sich dynamisch ändernden Last 7, beispielsweise wie bei einem Schweißprozess, beispielsweise einem WIG (Wolfram-Inter-Gas Schweißprozess), ändert sich auch die Resonanzfrequenz fᵣₑₛ und das Übertragungsverhalten des Resonanzwandlers (andere Frequenzkennlinie) dynamisch. Damit wird auch die Anregefrequenz f_{A} im Betrieb des Resonanzwandlers 1 üblicherweise dynamisch geändert, um überresonant zu Schalten und die Verluste zu minimieren. Durch Synchronisation der Anregefrequenz f_{A} auf die Nulldurchgänge N einer elektrischen Größe im Resonanzkreis 3 kann das auf einfache Weise erfolgen.

Um die Schaltverluste in den Halbleiterschaltern S1, S2, S3, S4 der Brückenschaltung 4 niedrig zu halten, wird vorzugsweise bei einem Nulldurchgang N einer elektrischen Größe im Resonanzkreis 3, beispielsweise des Resonanzkreisstromes i_{P}, geschaltet. Das Schalten der Halbleiterschalter S1, S2, S3, S4 erfolgt somit mit der Anregefrequenz f_{A}, die wiederum von der Last R_{L} abhängig ist und während des Betriebes des Resonanzwandlers 1 schwanken kann. Die Anregefrequenz f_{A} ändert sich folglich üblicherweise dynamisch mit dem Schwanken an der Last 7. Dabei kann entweder der Beginn oder das Ende einer Treibphase (erster Schaltzeitpunkt), üblicherweise der Beginn, beim Nulldurchgang N geschaltet werden. Das entsprechende Ende oder der Beginn der Treibphase (zweiter Schaltzeitpunkt) wird mit der Pulsbreite Ψ versetzt geschaltet. Um zu erreichen, dass die Anregefrequenz f_{A} größer als die Resonanzfrequenz fᵣₑₛ (überresonanter Betrieb) aber in der Nähe der Resonanzfrequenz fᵣₑₛ ist, kann die Treibphase kurz vor (typischerweise im Bereich von einigen hundert ns bis einigen µs) dem Nulldurchgang N begonnen werden (wie in Fig.2 dargestellt). In Fig.2 wird beispielsweise die Treibphase kurz vor dem Nulldurchgang N des Stromes i_{P} begonnen. Daher muss die Steuereinheit 8 zur Steuerung der Schaltzeitpunkte der Brückenschaltung 4 den Nulldurchgang N erfassen und verarbeiten, um synchron mit dem Nulldurchgang N schalten zu können.

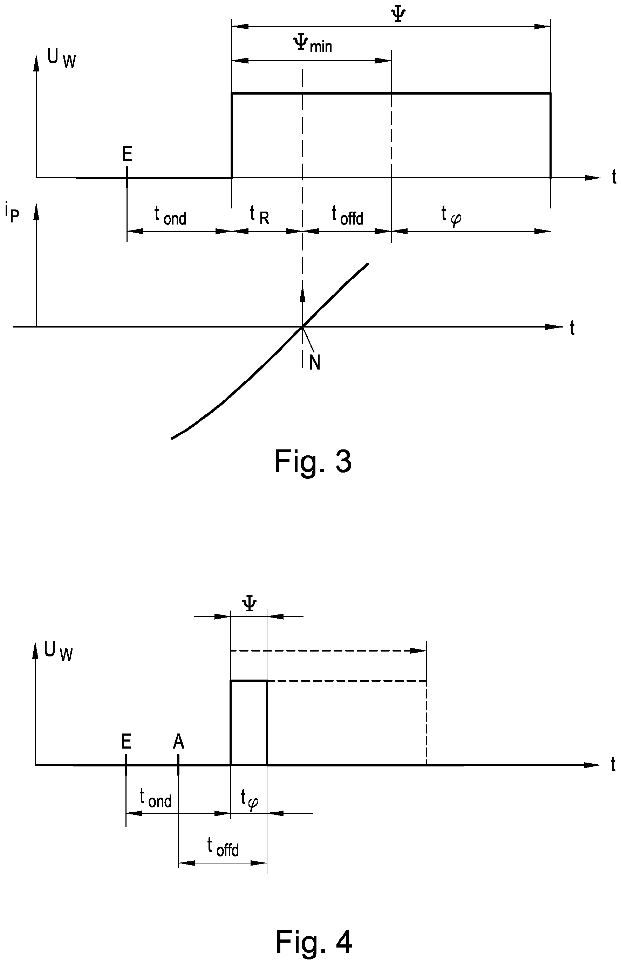

Es ist aber eine unvermeidbare Einschaltverzögerung t_{ond} zwischen dem Einschaltbefehl E durch die Steuereinheit 8 und dem tatsächlichen Einschalten der Halbleiterschalter S1, S2, S3, S4 vorhanden, wie in Fig.3 anhand der resultierenden Wechselspannung U_{w} dargestellt ist. Diese Einschaltverzögerung t_{ond} ergibt sich beispielsweise durch die Verarbeitung in der Steuereinheit 8, durch die Ausgabe des Steuerbefehls an den Gatetreiber eines Halbleiterschalters S1, S2, S3, S4, dem Umsetzen des Steuerbefehls durch den Gatetreiber und der Einschaltzeit des Halbleiterschalters S1, S2, S3, S4. Diese Einschaltverzögerung t_{ond} ist durch die hardwaremäßige und softwaremäßige Implementierung vorgegeben und liegt typischerweise im Bereich von 50ns bis 400ns (auch frequenzabhängig). Daher ist vorzugsweise vorgesehen, dass die Steuereinheit 8 die Bearbeitung des Einschaltens der Halbleiterschalter S1, S2, S3, S4 zumindest um diese Einschaltverzögerung t_{ond} vor dem Nulldurchgang N beginnt. Da das Einschalten im überresonanten Betrieb des Resonanzwandlers 1 vor dem Nulldurchgang N erfolgen soll, wird zur Einschaltverzögerung t_{ond} noch eine Einschaltreservezeit t_{R} hinzugefügt, die typischerweise im Bereich von 100ns bis 800ns liegt. Damit schaltet der Halbleiterschalter S1, S2, S3, S4 in etwa um die Einschaltreservezeit t_{R} vor dem Nulldurchgang N, wie in Fig.3 dargestellt. Die Einschaltverzögerung t_{ond} beeinflusst nicht die Pulsbreite Ψ der Treibphase. Das zeitliche Auftreten des Nulldurchganges N kann für das Einschalten geschätzt werden, beispielsweise aus der bekannten Resonanzfrequenz fᵣₑₛ der vorgehenden Schaltperiode. Die Ungewissheit der Schätzung kann ebenfalls in der Einschaltreservezeit t_{R} abgebildet sein.

Zum Ausschalten des Halbleiterschalters S1, S2, S3, S4 wird der Nulldurchgang N in der Steuereinheit 8 erfasst und verarbeitet. So wie beim Einschalten ergibt sich aufgrund der vorhandenen Verzögerungen (Erfassung und Verarbeitung in der Steuereinheit, Ausgabe des Steuerbefehls an den Gatetreiber, Umsetzen des Steuerbefehls durch den Gatetreiber und Ausschaltzeit des Halbleiterschalters S1, S2, S3, S4) eine unvermeidbare Ausschaltverzögerung t_{offd} (Fig.3). Das ist die Zeit zu der frühestens nach dem Erfassen des Nulldurchgangs N ausgeschaltet werden kann. Diese Ausschaltverzögerung t_{offd} ist durch die hardwaremäßige und softwaremäßige Implementierung des Resonanzwandlers 1 vorgegeben und liegt typischerweise im Bereich von 100ns bis 500ns.

Damit ist die minimal erreichbare Pulsbreite Ψₘᵢₙ im Normalbetriebsmodus bei Synchronisierung der Schaltzeitpunkte auf die Resonanzfrequenz fᵣₑₛ, oder genauer auf die Nulldurchgänge N der Schwingung der elektrischen Größe des Resonanzkreises 3 mit Resonanzfrequenze fᵣₑₛ, durch die Einschaltreservezeit t_{R} und die Ausschaltverzögerung t_{offd} begrenzt. Damit kann der Ausgangsstrom I_{S} im Normalbetrieb nicht unterhalb eines gewissen Wertes absinken.

Die Pulsbreite Ψ kann im Betrieb des Resonanzwandlers 1 zur Steuerung des Resonanzwandlers 1, insbesondere des Ausgangsstromes I_{S} und/oder der Ausgangsspannung U_{S}, variiert werden, beispielsweise durch Vorgabe einer Einschaltzeit t_{ϕ}, wie in Fig.3 dargestellt. Nachdem die Einschaltreservezeit t_{R} und die Ausschaltverzögerung t_{offd} üblicherweise vorgegeben sind, erfolgt die Steuerung vorzugsweise durch die Vorgabe der Einschaltzeit t_{ϕ}.

Um trotzdem niedrige Ausgangsströme I_{S}, die unterhalb der durch die minimal mögliche Pulsbreite Ψₘᵢₙ festgelegten Ausgangsströme I_{S} liegen, zu ermöglichen ist erfindungsgemäß ein zweiter Schaltmodus, auch als Niederstrommodus bezeichnet, vorgesehen, in dem die Anregefrequenz f_{A} nicht an die Resonanzfrequenz fᵣₑₛ gekoppelt wird, indem das Schalten der Halbleiterschalter S1, S2, S3, S4 nicht auf den Nulldurchgang N einer elektrischen Größe des Resonanzkreises 3, beispielsweise dem Resonanzkreisstrom i_{P}, synchronisiert ist.

In diesem Niederstrommodus werden die Halbleiterschalter S1, S2, S3, S4 mit einer festgelegten Anregefrequenz f_{Af}, asynchron zum Nulldurchgang N der elektrischen Größe des Resonanzkreises 3 geschaltet. Die Anregefrequenz f_{Af} ist dabei größer, als die größte Resonanzfrequenz fᵣₑₛₘₐₓ des Resonanzkreises 3. Bei sich ändernder Last 7 (beispielsweise im Falle eines Schweißlichtbogens) ist die Anregefrequenz f_{Af} damit auch größer als die sich aus der Implementierung ergebende größte Resonanzfrequenz fᵣₑₛₘₐₓ des Resonanzkreises 3 (bei Leerlauf). Typischerweise wird die Anregefrequenz f_{Af} im Niederstrommodus um 10% bis 30% größer als die maximale Resonanzfrequenz fᵣₑₛₘₐₓ, festgelegt, beispielsweise mit 170kHz bei einer maximalen Resonanzfrequenz fᵣₑₛₘₐₓ=150kHz. Damit muss die Steuerung der Halbleiterschalter S1, S2, S3, S4 nicht mehr auf den Nulldurchgang N synchronisiert werden, wodurch die Einschaltreservezeit t_{R} nicht mehr benötigt wird die Pulsbreite Ψ der Treibphase deutlich verkürzt werden (Fig.4). Das ermöglicht auch eine deutliche Reduzierung des minimal möglichen Ausgangsstromes I_{S}.

Nachdem im Niederstrommodus nicht mehr auf den Nulldurchgang N synchronisiert wird, kann die Steuereinheit 8 den Ausschaltbefehl A für die Halbleiterschalter S1, S2, S3, S4 vor dem eigentlichen Ausschalten erzeugen, um die Ausschaltverzögerung t_{offd} zumindest teilweise zu kompensieren, wie in Fig.4 angedeutet, sodass die Pulsbreite Ψ im Niederstrommodus gegen Null gehen kann. Auch im Niederstrommodus kann die Pulsbreite Ψ durch die Einschaltzeit t_{ϕ} gesteuert werden. Aus der Implementierung wird sich eine minimal mögliche Einschaltzeit t_{ϕ} ergeben. Durch Vorgabe der Einschaltzeit t_{ϕ} und anhand der bekannten Ausschaltverzögerung t_{offd} kann die Steuereinheit 8 den Ausschaltbefehl A zum richtigen Zeitpunkt erzeugen, um im Niederstrommodus die gewünschte Pulsbreite Ψ der Treibphase zu erzielen.

Beispielsweise konnte durch die Implementierung des Niederstrommodus der minimal mögliche Ausgangsstrom I_{S} einer Schweißstromquelle mit einem Resonanzwandler 1 von 13A auf 3A, bei jeweils 10V Ausgangsspannung U_{S}, gesenkt werden. Speziell beim WIG Schweißen ist dies besonders vorteilhaft.

Das Umschalten von Normalbetriebsmodus auf den Niederstrommodus kann grundsätzlich zu jedem beliebigen Zeitpunkt erfolgen. Beispielsweise kann ein bestimmter Ausgangsstrom I_{S} (Umschaltstrom) vorgegeben werden, beispielsweise 30A, bei dem von Normalbetriebsmodus auf den Niederstrommodus umgeschaltet wird. Es kann aber auch ein Wechsel in den Niederstrommodus erfolgen, wenn eine vorgegebene minimale Pulsbreite Ψₘᵢₙ im Normalstrommodus, beispielsweise 1µs, erreicht ist. Genauso kann aus dem Niederstrommodus wieder auf den Normalbetriebsmodus umgeschaltet werden, wenn der Ausgangsstrom I_{S} im Niederstrommodus einen vorgegebenen Umschaltstrom überschreitet. Ebenso kann aus dem Niederstrommodus in den Normalbetriebsmodus gewechselt werden, wenn im Niederstrommodus eine vorgegebene Pulsbreite Ψ überschritten wird Um ein ständiges Hin- und Herschalten im Bereich des Umschaltstromes oder der vorgesehenen Pulsbreiten zu vermeiden, kann auch eine bestimmte Umschalthysterese vorgegeben sein. Mit dem Umschalten von Normalbetriebsmodus auf den Niederstrommodus wird auf die vorgegebene Anregefrequenz f_{Af} umgeschaltet und beim Umschalten von Niederstrommodus auf den Normalbetriebsmodus auf die dynamische variable Anregefrequenz f_{A} mit Synchronisierung auf den Nulldurchgang N.

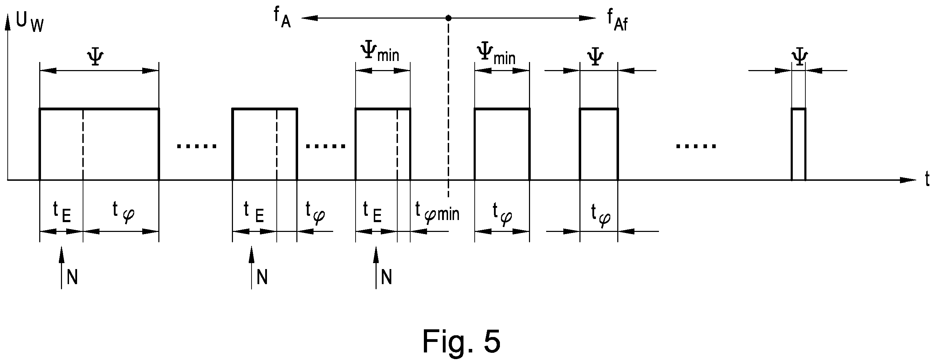

Vorteilhafterweise wird jedoch eine Umschaltstrategie implementiert, um ein möglichst störungsfreies und stabiles Umschalten sicherzustellen, was anhand der Fig.5 erläutert wird.

Fig.5 zeigt die Wechselspannung u_{W} (in diesem Fall mit nur positiven Pulsen) zur Anregung des Resonanzkreises, die durch Ansteuerung der Halbleiterschalter S1, S2, S3, S4 des Resonanzwandlers 1 erzeugt wird. Die Zeit t_{E} bezeichnet dabei im Normalbetriebsmodus die Summe der Einschaltreservezeit t_{R} und der Ausschaltverzögerung t_{offd} und damit die minimal mögliche Pulsbreite Ψₘᵢₙ im Normalbetriebsmodus. Im Ausführungsbeispiel verkürzt die Steuereinheit 8 die Pulsbreite Ψ im Normalbetriebsmodus, über die Einschaltzeit t_{ϕ}, da weniger Ausgangsstrom I_{S} benötigt wird. Je niedriger der Ausgangsstrom I_{S} sein soll, umso kürzer wird die Einschaltzeit t_{ϕ} sein, die den Ausschaltzeitpunkt nach dem Nulldurchgang N festlegt. Dabei kann die Einschaltzeit t_{ϕ} solange sinken, bis eine vorgegebene minimale Einschaltzeit t_{ϕmin} (t_{ϕmin} ≥ 0) erreicht ist. Das entspricht somit der kleinsten Pulsbreite Ψₘᵢₙ, die im Normalbetriebsmodus erreicht werden kann (wie oben beschrieben). Spätestens zu diesem Zeitpunkt erfolgt der Übergang auf den Niederstrommodus, wie in Fig.5 durch die strichlierte Linie angedeutet. Der Übergang erfolgt so, dass von der variablen Anregefrequenz f_{A} mit Synchronisation auf den Nulldurchgang N auf die vorgegebene Anregefrequenz f_{Af} umgeschaltet wird und dass die Pulsbreite Ψₘᵢₙ dabei beim Umschalten zuerst im Wesentlichen gleich bleibt. Nachdem nun nicht mehr auf den Nulldurchgang N synchronisiert wird, sondern mit der vorgegebenen Anregefrequenz f_{Af} geschaltet wird, kann die Pulsbreite Ψ im Niederstrommodus bedarfsweise weiter reduziert werden, wie oben beschrieben, um den Ausgangsstrom I_{S} weiter zu senken.

Beim Umschalten vom Niederstrommodus in den Normalbetriebsmodus kann entsprechend umgekehrt vorgegangen werden.

Wie erwähnt, kann beim Wechsel vom Normalbetriebsmodus in den Niederstrommodus, und/oder umgekehrt, eine Hysterese berücksichtigt werden, sodass die minimale Pulsbreite Ψₘᵢₙ beim jeweiligen Umschalten um eine bestimmte vorgegebene Hysteresezeit verlängert wird. In der minimalen Pulsbreite Ψₘᵢₙ kann somit eine vorgegebene Hysteresezeit enthalten sein. Aufgrund von möglicherweise vorgesehenen Umschalthysteresen, kann die Pulsbreite Ψₘᵢₙ im Niederstrommodus, insbesondere beim Umschalten, aber auch größer sein, als im Normalbetriebsmodus.

Obwohl im Niederstrommodus nun nicht mehr synchron mit dem Nulldurchgang N geschaltet wird, fällt das hinsichtlich der Schaltverluste wenig ins Gewicht, weil die Anregefrequenz f_{Af} höher als die höchste mögliche Resonanzfrequenz fᵣₑₛₘₐₓ gewählt wurde.

## Patentansprüche

1. Verfahren zur Steuerung eines Resonanzwandlers (1) zum Erzeugen eines Ausgangsstromes (I_{S}) und einer Ausgangsspannung (U_{S}), wobei der Resonanzwandler (1) eine Brückenschaltung (4) mit Halbleiterschaltern (S1, S2, S3, S4) zum Erzeugen einer Wechselspannung (u_{w}) und einen elektrischen Resonanzkreis (3) mit einer Resonanzfrequenz (fᵣₑₛ) umfasst, wobei der Resonanzkreis (3) des Resonanzwandlers (1) in einem Normalbetriebsmodus des Resonanzwandlers (1) durch die Wechselspannung (u_{w}) mit einer Anregefrequenz (f_{A}) zum Schwingen angeregt wird, wobei Schaltzeitpunkte der Halbleiterschalter (S1, S2, S3, S4) der Brückenschaltung (4) im Normalbetriebsmodus zur Erzeugung der Wechselspannung (u_{w}) auf einen Nulldurchgang (N) einer mit der Resonanzfrequenz (fᵣₑₛ) schwingenden elektrischen Größe des Resonanzkreises (3) synchronisiert werden, **dadurch gekennzeichnet, dass** die Halbleiterschalter (S1, S2, S3, S4) in einem Niederstrommodus mit einer festgelegten Anregefrequenz (f_{Af}), die größer als die größte Resonanzfrequenz (fᵣₑₛₘₐₓ) ist, und asynchron zum Nulldurchgang (N) der mit der Resonanzfrequenz (fᵣₑₛ) schwingenden elektrischen Größe des Resonanzkreises (3) geschaltet werden.

2. Verfahren nach Anspruch 1, **dadurch gekennzeichnet, dass** die Halbleiterschalter (S1, S2, S3, S4) der Brückenschaltung (3) zur Erzeugung der Wechselspannung (u_{w}) mit Pulsen mit einer Pulsbreite (Ψ) geschaltet werden, wobei sich im Normalbetriebsmodus eine minimal mögliche Pulsbreite (Ψₘᵢₙ) ergibt und im Niederstrommodus die Pulsbreite (Ψ) der Pulse der Wechselspannung (u_{w}) kleiner oder gleich der minimal möglichen Pulsbreite (Ψₘᵢₙ) im Normalbetriebsmodus ist.

3. Verfahren nach Anspruch 2, **dadurch gekennzeichnet, dass** vom Normalbetriebsmodus auf den Niederstrommodus umgeschaltet wird, wenn die Pulsbreite (Ψ) im Normalbetriebsmodus die minimal mögliche Pulsbreite (Ψₘᵢₙ) erreicht oder vom Niederstrommodus auf den Normalbetriebsmodus umgeschaltet wird, wenn die Pulsbreite (Ψ) im Niederstrommodus die minimal mögliche Pulsbreite (Ψₘᵢₙ) des Normalbetriebsmodus erreicht.

4. Verfahren nach Anspruch 3, **dadurch gekennzeichnet, dass** beim Umschalten vom Normalbetriebsmodus in den Niederstrommodus, oder umgekehrt, zumindest der erste Puls der Wechselspannung (u_{w}) im Niederstrommodus oder beim Umschalten vom Niedermodus in den Normalbetriebsmodus zumindest der erste Puls der Wechselspannung (u_{w}) im Normalbetriebsmodus die minimal mögliche Pulsbreite (Ψₘᵢₙ) des Normalbetriebsmodus aufweist.

5. Verfahren nach Anspruch 1 oder 2, **dadurch gekennzeichnet, dass** vom Normalbetriebsmodus auf den Niederstrommodus umgeschaltet wird, wenn ein Ausgangsstrom (I_{S}) des Resonanzwandlers (1) auf einen vorgegebenen Umschaltstrom absinkt oder vom Niederstrommodus auf den Normalbetriebsmodus umgeschaltet wird, wenn ein Ausgangsstrom (I_{S}) des Resonanzwandlers (1) auf einen vorgegebenen Umschaltstrom ansteigt.

6. Verfahren nach einem der Ansprüche 1 bis 5, **dadurch gekennzeichnet, dass** bei einer sich dynamisch ändernden Resonanzfrequenz (fᵣₑₛ) des Resonanzkreises (3), die vorgegebene Anregefrequenz (f_{Af}) im Niederstrommodus größer als die größte Resonanzfrequenz (fᵣₑₛₘₐₓ) des Resonanzkreises (3) gewählt wird.

7. Resonanzwandler zum Erzeugen eines Ausgangsstromes (I_{S}) und einer Ausgangsspannung (U_{S}), wobei der Resonanzwandler (1) eine Brückenschaltung (4) mit Halbleiterschalter (S1, S2, S3, S4) zum Erzeugen einer Wechselspannung (u_{w}) und einen elektrischen Resonanzkreis (3) umfasst, wobei eine Steuereinheit (8) vorgesehen ist, die in einem Normalbetriebsmodus die Halbleiterschalter (S1, S2, S3, S4) der Brückenschaltung (4) zur Erzeugung einer Wechselspannung (u_{w}) mit einer Anregefrequenz (f_{A}), die den Resonanzkreis (3) zum Schwingen anregt, synchron mit einem Nulldurchgang (N) einer mit der Resonanzfrequenz (fᵣₑₛ) des Resonanzkreises (3) schwingenden elektrischen Größe des Resonanzkreises (3) schaltet, **dadurch gekennzeichnet, dass** die Steuereinheit (8) die Halbleiterschalter (S1, S2, S3, S4) in einem Niederstrommodus mit einer vorgegebenen Anregefrequenz (f_{Af}), die größer als die größte Resonanzfrequenz (fᵣₑₛ) des Resonanzkreises (3) ist, und asynchron zum Nulldurchgang (N) der mit der Resonanzfrequenz (fᵣₑₛ) schwingenden elektrischen Größe des Resonanzkreises (3) schaltet.

8. Resonanzwandler nach Anspruch 7, **dadurch gekennzeichnet, dass** die Steuereinheit (8) die Halbleiterschalter (S1, S2, S3, S4) der Brückenschaltung (4) zur Erzeugung der Wechselspannung (u_{w}) mit Pulsen mit einer Pulsbreite (Ψ) schaltet, wobei im Normalbetriebsmodus eine minimal mögliche Pulsbreite (Ψₘᵢₙ) vorgegeben ist und im Niederstrommodus die Pulsbreite (Ψ) kleiner oder gleich der minimal möglichen Pulsbreite (Ψₘᵢₙ) im Normalbetriebsmodus ist.

9. Resonanzwandler nach Anspruch 8, **dadurch gekennzeichnet, dass** die Steuereinheit (8) vom Normalbetriebsmodus auf den Niederstrommodus umschaltet, wenn die Pulsbreite (Ψ) im Normalbetriebsmodus die minimal mögliche Pulsbreite (Ψₘᵢₙ) erreicht oder die Steuereinheit (8) vom Niederstrommodus auf den Normalbetriebsmodus umschaltet, wenn die Pulsbreite (Ψ) im Niederstrommodus die minimal mögliche Pulsbreite (Ψₘᵢₙ) erreicht.

10. Resonanzwandler nach Anspruch 8 oder 9, **dadurch gekennzeichnet, dass** beim Umschalten vom Normalbetriebsmodus in den Niederstrommodus zumindest der erste Puls der Wechselspannung (u_{w}) im Niederstrommodus die minimal mögliche Pulsbreite (Ψₘᵢₙ) des Normalbetriebsmodus aufweist oder beim Umschalten vom Niederstrommodus in den Normalbetriebsmodus zumindest der erste Puls der Wechselspannung im Normalbetriebsmodus die minimal mögliche Pulsbreite (Ψₘᵢₙ) des Normalbetriebsmodus aufweist.

11. Resonanzwandler nach Anspruch 7 oder 8, **dadurch gekennzeichnet, dass** die Steuereinheit (8) vom Normalbetriebsmodus auf den Niederstrommodus umschaltet, wenn ein Ausgangsstrom (I_{S}) des Resonanzwandlers (1) auf einen vorgegebenen Umschaltstrom absinkt oder vom Niederstrommodus auf den Normalbetriebsmodus umschaltet, wenn ein Ausgangsstrom (I_{S}) des Resonanzwandlers auf einen vorgegebenen Umschaltstrom ansteigt.

12. Resonanzwandler nach einem der Ansprüche 7 bis 11, **dadurch gekennzeichnet, dass** die Anregefrequenz (f_{Af}) im Niederstrommodus bei einer sich dynamisch ändernden Resonanzfrequenz (fᵣₑₛ) des Resonanzkreises (3) größer als die größte Resonanzfrequenz (fᵣₑₛₘₐₓ) des Resonanzkreises (3) ist.

13. Verwendung des Resonanzwandlers (1) nach einem der Ansprüche 7 bis 12 als Schweißstromquelle zur Versorgung eines Schweißbrenners mit einer Schweißspannung als Ausgangsspannung (U_{S}) des Resonanzwandlers (1) und einem Schweißstrom (I_{S}) als Ausgangstrom des Resonanzwandlers (1).
